# EUROPÄISCHE PATENTSCHRIFT

(11) **EP 3 117 120 B1**
(45) Veröffentlichungstag und Bekanntmachung des Hinweises auf die Patenterteilung: **27.05.2020**
(21) Anmeldenummer: 15701774.0
(22) Anmeldetag: 28.01.2015
(51) Int. Cl.: F16F 13/14, F16F 13/28

(54) **HYDROBUCHSENANORDNUNG**
HYDRO-BUSH ARRANGEMENT
ENSEMBLE PALIER HYDRODYNAMIQUE

(30) Priorität: 14.03.2014 DE 102014003506
(43) Veröffentlichungstag der Anmeldung: 18.01.2017
(73) Patentinhaber: Trelleborg Antivibration Solutions Germany GmbH, 16727 Velten (DE)
(72) Erfinder: CORDTS, Detlef, 16348 Wandlitz (DE); GUND, Christoph, 69221 Dossenheim (DE); ANDREAS, Erl, 16761 Henningsdorf (DE); MARTIN, Dunda, 68526 Ladenburg (DE)
(74) Vertreter: Reiser & Partner Patentanwälte mbB
(86) Internationale Anmeldenummer: PCT/EP2015/051711
(87) Internationale Veröffentlichungsnummer: WO 2015/135684

(56) Entgegenhaltungen:
- EP-A2- 1 734 278
- FR-A1- 2 858 673
- FR-A1- 2 906 856
- JP-A- S60 240 509
- JP-A- S63 231 032
- US-A- 4 687 223
- US-A- 4 858 899

## Beschreibung

### Technisches Gebiet

Die Erfindung betrifft eine Hydrobuchsenanordnung, umfassend ein hülsenförmiges Gehäuse, welches eine Innenhülse mit radialem Abstand umgibt, wobei Gehäuse und Innenhülse über einen Federkörper miteinander wirkverbunden sind, wobei der Federkörper so ausgebildet ist, dass sich zwischen Gehäuse und Innenhülse zwei Kammern ausbilden, welche mit einer Hydraulikflüssigkeit befüllbar sind und wobei die Kammern mit zumindest einer Einrichtung hydraulisch verbunden sind.

### Stand der Technik

Hydrobuchsen sind beispielsweise aus der DE 10 2005 003 052 A1 bekannt. Die vorbekannte Hydrobuchse ist als hydraulisch dämpfende Hülsengummifeder ausgebildet, umfassend einen inneren Stützkörper, der von einem äußeren Stützkörper mit radialem Abstand umschlossen ist, wobei in den durch den Abstand gebildeten Spalt ein Federkörper aus elastomerem Werkstoff angeordnet ist, der radial innenseitig mit dem inneren Stützkörper verbunden und radial außenseitig mittels eines Stützrings am äußeren Stützkörper festgelegt ist.

Die vorbekannte Hydrobuchse umfasst eine mit Dämpfungsflüssigkeit gefüllte Arbeitskammer, die mittels eines Dämpfungskanals flüssigkeitsleitend mit einer ebenfalls mit Dämpfungsflüssigkeit gefüllten ersten Ausgleichskammer verbunden ist. Beide Kammern befinden sich innerhalb des durch den äußeren Stützkörper begrenzten Raumes. Ebenso ist die strömungsleitende Verbindung zwischen den beiden Kammern im Inneren der Hydrobuchse angeordnet.

Bei Einleitung tieffrequenter, großamplitudiger Schwingungen in die Hydrobuchse wird der innere Stützkörper bezogen auf den äußeren Stützkörper radial verlagert, so dass durch eine Volumenverkleinerung der Arbeitskammer ein Teil der in der Arbeitskammer enthaltenen Flüssigkeit über die strömungsleitende Verbindung in die Ausgleichskammer gefördert wird. Dabei kann die strömungsleitende Verbindung zwischen den beiden Kammern derart ausgestaltet werden, dass sich bei bestimmten Frequenzen, insbesondere im Resonanzbereich, eine größtmögliche Dämpfung ergibt. Die vorbekannte Hydrobuchse ist jedoch ein rein passives Bauteil, so dass keine Veränderung des Arbeitsbereiches möglich ist und der Bereich der optimalen Dämpfung auf einen bestimmten Frequenzbereich festgelegt ist.

Aus der DE 43 01 149 ist ein aktiv dämpfendes hydraulisches Motorlager bekannt. Dieses weist ein Auflager und ein Traglager auf, welche über einen Federkörper miteinander wirkverbunden sind und einen mit einer Hydraulikflüssigkeit gefüllten Arbeitsraum begrenzen. Der Arbeitsraum ist mit einer externen hydraulischen Druckquelle wirkverbunden, durch die der Flüssigkeitsdruck in der Arbeitskammer belastungsabhängig regelbar ist.

In einer Ausgestaltung kann das aktive Motorlager als Hydrobuchse ausgebildet sein, welche im Gehäuseinneren zwei Kammern aufweist, die über getrennte Zuläufe mit einer Flüssigkeit beaufschlagt werden können. Auch bei dieser Ausgestaltung ist lediglich über eine extern angeordnete Pumpe eine Steuerung des Flüssigkeitsdruckes der beiden Arbeitskammern möglich.

Dokument JP63231032 wird als nächstliegenden Stand der Technik angesehen und offenbart ebenfalls eine Buchsenanordnung mit zwei Kammern, die mit einer Flüssigkeit beaufschlagt werden können.

### Beschreibung

Der Erfindung liegt die Aufgabe zugrunde, eine Hydrobuchsenanordnung bereitzustellen, welche sowohl aktiv als auch passiv betrieben werden kann und welche über einen großen Frequenzbereich schwingungsdämpfende und/oder schwingungsisolierende Wirkung aufweist.

Diese Aufgabe wird den Merkmalen von Anspruch 1 gelöst. Auf vorteilhafte Ausgestaltungen nehmen die Unteransprüche Bezug.

Zur Lösung der Aufgabe ist die Einrichtung außerhalb des Gehäuses angeordnet. Dadurch, dass die Einrichtung außerhalb des Gehäuses angeordnet ist, ist es möglich aktive Steuerungsmittel vorzusehen, welche die Art und Weise des Ein- und Ausströmens der Hydraulikflüssigkeit in und aus den Kammern beeinflussen. Dabei kann je nach Ausprägung und Schaltung der Einrichtung zwischen den beiden Kammern eine strömungsleitende Verbindung bestehen, welche je Strömungswiderstand in der Einrichtung und früherer oder späterer Umschaltung innerhalb der Einrichtung eine Änderung von einer harten zu einer weichen Charakteristik der Hydrobuchse ermöglichen kann.

Erfindungsgemäß ist dabei denkbar, dass das Lager in einem passiven, in einem semi-aktiven oder in einem aktiven Modus betrieben wird. Dabei sind die Kammern und deren strömungsleitende Verbindung über die Einrichtung vorzugsweise so eingestellt, dass bei niederfrequenten, großamplitudigen Relativbewegungen ein aktiver Betriebsmodus vorliegt. Bei hochfrequenten Relativbewegungen liegt vorzugsweise ein passiver Betriebsmodus vor. Bei dem aktiven Betriebsmodus werden die in der Einrichtung vorgesehenen Aktoren laufend derart reguliert, dass sich eine optimale Dämpfung der Anregung ergibt. Der semi-aktive Betriebsmodus wird vorzugsweise zwischen diesen beiden Betriebszuständen gewählt. Bei dem semi-aktiven Betriebsmodus wird wenigstens ein Volumenstrom zwischen den Kammern mittels einer Hilfsenergie betragsmäßig modifiziert.

Insgesamt ergibt sich dadurch eine Hydrobuchsenanordnung, welche je nach Anforderung eine passende Steifigkeit und Dämpfung bereitstellt und dies bei geringstmöglichem Einsatz von Energie, welche dem Lager von außen zuzuführen ist.

Zum Anschluss der Einrichtung kann das Gehäuse Öffnungen aufweisen, wobei jeder Kammer zumindest eine Öffnung zugeordnet ist. In einer ersten Ausgestaltung ist jeder Kammer eine Strömungsleitung zugeordnet, wobei die Strömungsleitungen in der Einrichtung hydraulisch so geschaltet werden, dass über die außen angeordnete Einrichtung ein Umströmen der Hydraulikflüssigkeit zwischen den Kammern möglich ist. In einer weiteren Ausgestaltung sind je Kammer mehrere Strömungsleitungen, beispielsweise zwei Strömungsleitungen vorgesehen. Bei jeder Ausgestaltung ist jedoch vorzugsweise die strömungsleitende Verbindung bidirektional durchströmbar, so dass durch die strömungsleitende Verbindung sowohl Hydraulikflüssigkeit zu- aber auch abgeführt werden kann. Sind je Kammer mehrere Strömungsleitungen vorhanden, ist es denkbar, dass eine der Strömungsleitung nur in einer Richtung durchströmbar ist. Eine derartige Ausgestaltung ist insbesondere im Zusammenhang mit einem Druckspeicher vorteilhaft.

Die Einrichtung umfasst aktive Steuerungsmittel. Die aktiven Steuerungsmittel, auch als Aktoren bezeichnet, beeinflussen mittels von außen zugeführter Energie die strömungsleitenden Einrichtungen. Nach der Erfindung beeinflussen die aktiven Steuerungsmittel den Volumenstrom der zwischen den Kammern umströmenden Hydraulikflüssigkeit. Dabei gilt grundsätzlich, dass sich bei Öffnung der strömungsleitenden Einrichtung ein großer Volumenstrom einstellen kann, was zu einer weichen Federcharakteristik mit großen Auslenkungen führt. Umgekehrt gilt grundsätzlich, dass sich bei nahezu verschlossenen aktiven Steuerungsmitteln nur noch ein geringer Volumenstrom zwischen den Kammern ergibt, so dass sich eine harte Federcharakteristik mit kleinen Auslenkungen der Hydrobuchse einstellt.

Erfindungsgemäß ist die Einrichtung mit einer Ventilanordnung versehen. Dabei können die Ventile der Ventilanordnung als Proportionalventile ausgebildet sein.

Für die Ausgestaltung der Ventilanordnung ist der Einsatz verschiedener Ventiltechnologien denkbar. In einer ersten Ausgestaltung umfasst die Ventilanordnung Sitzventile. Diese weisen geringe Betätigungswege auf, kurze Schaltzeiten und sie sind unempfindlich gegenüber Schmutz. Jedoch wird ein erheblicher Bauraum benötigt, um einen hohen Durchfluss zu erzielen.

Vorzugsweise umfasst die Ventilanordnung Kolbenschieberventile. Bei diesen ist insbesondere vorteilhaft, dass gegenüber Sitzventilen die Betätigungskräfte deutlich geringer sind, da Kolbenschieberventile nicht gegen Kräfte geschaltet werden, die durch den Arbeitsdruck in den strömungsleitenden Einrichtungen entstehen. Bei beiden Ventilausprägungen ist es möglich, über einen Aktor mehrere Strömungskanäle gleichzeitig hinsichtlich des Volumenstroms zu regulieren.

Ein Proportionalventil ist ein über Hilfsenergie steuerbares Ventil, welches nicht nur diskrete Schaltstellungen zulässt, sondern einen stetigen Übergang der Ventilöffnung von geschlossen in Richtung offen und umgekehrt ermöglicht. Dadurch ist es möglich, den Volumenstrom der strömungsleitenden Einrichtung über einen großen Bereich zu regulieren.

Dabei kann die Hydrobuchsenanordnung mehrere Proportionalventile umfassen, wobei jeder Kammer zumindest ein Proportionalventil zugeordnet ist. Werden die Proportionalventil vollständig geöffnet, ergibt sich der größtmögliche Volumenstrom, so dass die Hydraulikflüssigkeit ungehindert zwischen den beiden Kammern umströmen kann. Hierbei ergibt sich eine weiche Federungscharakteristik. Es ist aber auch denkbar, wenigstens eines der Proportionalventile oder beide Proportionalventile vollständig zu schließen, so dass keine Hydraulikflüssigkeit von der einen Kammer in die andere Kammer umströmen kann. In diesem Fall ergibt sich eine harte Federungscharakteristik.

Alternativ können statt der Proportionalventile auch Wegeventile zum Einsatz gelangen. Diese ermöglichen je nach Ausgestaltung und Wahl der Schaltstellungen eine Änderung der Durchflusswege der Hydraulikflüssigkeit, so dass die Kammern befüllt und entleert werden können. Die Durchflussmenge und somit auch der Druck der Hydraulikflüssigkeit in den Kammern, welche schließlich die Charakteristik der Hydrobuchse bestimmt, wird durch die Schaltzeit des Wegeventils vorgegeben.

In einer weiteren Ventilanordnung ist denkbar, dass die Hydraulikflüssigkeit nicht nur von der einen Kammer in die andere Kammer umströmt. Es ist auch denkbar, dass die Hydraulikflüssigkeit in der strömungsleitenden Einrichtung hin- und herschwingt, ohne von der einen Kammer in die andere Kammer umzuströmen.

Des Weiteren ist es denkbar, dass die Hydraulikflüssigkeit einer Kammer oder beider Kammern in eine weitere Einrichtung strömt. Wird eines der Proportionalventile oder beide Proportionalventile teilweise geschlossen, ergibt sich ein verminderter Volumenstrom, so dass das Umströmen der Hydraulikflüssigkeit von der einen Kammer in die andere Kammer verlangsamt ist. Daraus resultiert eine hohe Dämpfung. Dabei ist es denkbar, den Volumenstrom zwischen den beiden Kammern so einzustellen, dass sich im Resonanzbereich der Anordnung eine größtmögliche Dämpfung ergibt.

Dem Gehäuse und der Innenhülse kann eine Sensoreinrichtung zugeordnet sein. Dabei kann die Sensoreinrichtung verschiedene Sensoren zur Erfassung verschiedener Zustände umfassen. Eine erste vorteilhafte Sensoreinrichtung erfasst den radialen Abstand von Gehäuse und Innenhülse. Da die Sensoreinrichtung direkt in der Hydrobuchse angeordnet ist, ist die Messwertbestimmung besonders schnell und genau.

Zur Erfassung des radialen Abstandes von Gehäuse und Innenhülse kann die Sensoreinrichtung eine Hall-Sonde umfassen. In Hallsonden wird zur Messung des Magnetfeldes der so genannte Halleffekt genutzt. In einem stromdurchflossenen Leiter werden die Elektronen durch die Lorentzkraft senkrecht zu einem von außen angelegten magnetischen Feld abgelenkt. In der dritten Raumrichtung, also senkrecht zum Strom und senkrecht zum Elektronenstrom entsteht an einer Seite eines Leiters ein Elektronenüberschuss und dadurch eine Spannung. Die sogenannte Hallspannung ist abhängig von der Ladungsträgerbeweglichkeit in dem Leiter.

Zur Erfassung des Abstandes wird eine Hallsonde an der Innenhülse angebracht und gegenüberliegend ein Dauermagnet an der Innenwand des Gehäuses oder umgekehrt. Da das magnetische Feld des Dauermagneten nahezu konstant ist, das auf die Hallsonde einwirkende Magnetfeld bei Veränderung des Abstandes zwischen Gehäuse und Innenhülse sich aber ändert, erfasst die Hallsonde jede Abstandsveränderung zwischen Gehäuse und Innenhülse. Dabei ist die Hallsonde sehr empfindliche, so dass auch kleine Abstandsänderungen erfasst werden. Die Auflösung beträgt vorzugsweise weniger als 0,1 mm.

In einer weiteren Ausgestaltung sind zwei Abstandssensoren in der Hydrobuchse angeordnet. Diese sind vorzugsweise einander gegenüberliegend angeordnet. Die zusätzliche Sensoranordnung ermöglicht eine Fehlerkorrektur, welche beispielsweise aus Temperaturänderungen resultieren kann.

Wird neben dem Maß der Abstandsveränderung auch die für die Veränderung benötigte Zeit bestimmt, kann die auf die Hydrobuchse einwirkende Beschleunigung und Auslenkungsgeschwindigkeit ermittelt werden. Beide Messgrößen können dann für die aktive Steuerung der Hydrobuchse herangezogen werden.

Des Weiteren ist es denkbar, dass die Sensoreinrichtung einen Temperatursensor umfasst, welcher die Temperatur der in den Kammern befindlichen Hydraulikflüssigkeit erfasst. Im Zusammenspiel mit einem Algorithmus kann aus der Temperatur auch die aktuelle Steifigkeit des Federkörpers bestimmt werden.

Darüber hinaus kann je Kammer ein Drucksensor vorgesehen sein, welcher den Druck im Inneren einer Kammer erfasst.

Die Sensoranordnung ermöglicht die Implementierung eines Steuerungsalgorithmus, welcher eine wahlweise Regelung der Hydrobuchse auch in Echtzeit ermöglicht. Der Steuerungsalgorithmus ermöglicht im Zusammenwirken mit Weg-, Druck- und Temperatursensor eine Änderung der Position der Innenhülse im Vergleich zu dem Gehäuse der Hydrobuchse. Dadurch kann die Innenhülse verlagert werden, was eine Modifikation der statischen und dynamischen Kraftverhältnisse des Lagers ermöglicht.

In Bezug auf die Verwendung der Hydrobuchse in einem Achslenkerlager eines Schienenfahrzeuges ist es beispielsweise möglich, das Achslenkerlager mittels des hydraulischen Drucks in den Kammern so einzustellen, dass das Achslenkerlager nach außen kraftfrei ist. Das heißt, dass die Hydrobuchse so eingeregelt ist, dass sich die an dem Achslenkerlager angreifenden Kräfte aufheben.

Des Weiteren ermöglicht der Steuerungsalgorithmus ein bewusstes Ansteuern von Fehllagen. Dies ist insbesondere dann vorteilhaft, wenn dadurch ein festgestellter einseitiger Verschleiß an einer Komponente der Achse oder des Achslenkerlagers des Schienenfahrzeugs festgestellt wurde. Durch die Ansteuerung einer Fehllage ist ein Ausgleich eines einseitigen Verschleißes möglich, so dass sich die Lebensdauer der Komponenten erhöht und der Wartungsaufwand sinkt.

In einer ersten Ausgestaltung kann die Einrichtung eine Drossel bilden. Wie zuvor ausgeführt, entsteht die Drosselwirkung dadurch, dass der Volumenstrom der zwischen den beiden Kammern umströmenden Hydraulikflüssigkeit reduziert wird. Dadurch wird bei Anregung die Hydraulikflüssigkeit durch die strömungsleitende Einrichtung mit kleinen Querschnitt hindurchgepresst. Dadurch wird ein Teil der eingebrachten Energie dissipiert und in Wärme umgewandelt, so dass eine eingebrachte Schwingungsanregung gedämpft werden kann.

In einer weiteren Ausgestaltung kann die Einrichtung einen Tilger bilden. Für einen Tilger wird die Ventilanordnung derart geschaltet, dass beispielsweise im Zusammenspiel mit einem Druckspeicher oder im Zusammenspiel mit den Blähfedern der Kammern die Hydraulikflüssigkeit in der strömungsleitenden Einrichtung hin und herschwingen kann. Dabei ist die Frequenz der in der strömungsleitenden Einrichtung schwingenden Hydraulikflüssigkeit zu der auf die Hydrobuchsenanordnung einwirkende Anregung phasenverschoben. Ist die Phasenverschiebung gegenphasig zu den eingeleiteten Schwingungen, erfolgt eine Isolierung dieser Schwingungen.

Weist jede Kammer mehrere strömungsleitende Einrichtungen auf, ist es denkbar, dass beide Kammern über eine erste strömungsleitende Einrichtung miteinander verbunden sind und über diese strömungsleitende Einrichtung ein Umpumpen der Hydraulikflüssigkeit von der einen Kammer in die andere Kammer möglich ist. Die diesem Strömungsweg zugeordnete Ventilanordnung ermöglicht durch Regulierung des Volumenstroms eine Einstellung der Dämpfungscharakteristik der Hydrobuchse. Die jeweils zweite strömungsleitende Einrichtung übernimmt die Tilgerfunktion, indem in diesen strömungsleitenden Einrichtungen die Hydraulikflüssigkeit hin- und herschwingt.

Insbesondere im Zusammenhang mit der Tilgerfunktion ist es vorteilhaft, wenn die Einrichtung einen Speicher umfasst. Die Funktion des Speichers ähnelt der eines Ausdehnungsgefäßes, so dass in den Speicher eintretende Hydraulikflüssigkeit drucklos aufgenommen werden kann. Es ist aber auch denkbar, dass der Speicher als Druckspeicher ausgebildet ist und so auch als Energiespeicher fungieren kann. Im Zusammenspiel mit einem Tilger kann die in der strömungsleitenden Einrichtung hin- und herschwingende Hydraulikflüssigkeit zumindest partiell von dem Speicher aufgenommen werden.

Der Speicher kann mit einer Pumpeinrichtung wirkverbunden sein, durch die Hydraulikflüssigkeit von den Kammern in den Speicher und zurückgefördert werden kann. Hierbei ist es auch denkbar, die Hydraulikflüssigkeit gänzlich aus den Kammern abzupumpen, um so eine besonders weiche Federungscharakteristik einstellen zu können.

Die erfindungsgemäße Hydrobuchsenanordnung ist insbesondere vorteilhaft bei Verwendung als aktives hydraulisches Achslenkerlager. Dabei ist die Hydrobuchsenanordnung vorzugsweise Teil eines Drehgestells eines Schienenfahrzeugs.

Aufgabe des Achslenkerlagers ist die Führung des Radsatzes eines Schienenfahrzeugs, welches für eine Kurvenfahrt Einstellbewegungen durchführen kann. Im Gegensatz zu einem konventionellen Achslenkerlager weist ein das Achslenkerlager mit der erfindungsgemäßen Hydrobuchsenanordnung eine hohe Steifigkeit auf, welche regelbar und insbesondere nicht frequenzabhängig ist.

In einem Drehgestell eines Schienenfahrzeuges wird der Einstellwinkel der Achsen vorwiegend von der Längssteifigkeit des Achslenkerlagers bestimmt. Dabei sind radial einstellbare Radsätze Grundvoraussetzung für einen verschleiß- und geräuscharmen Kurvenlauf. Ein ruhiger Lauf insbesondere bei hohen Geschwindigkeiten erfordert eine sehr hohe Steifigkeit des Achslenkerlagers.

Mittels der erfindungsgemäßen Hydrobuchsenanordnung ist es möglich, stets hohe Steifigkeiten des Lagers zu erzielen und die Achse bei Kurvenfahrt auf einen gewünschten Winkel zu bringen. Der in die Hydrobuchenanordnung integrierte Aktor samt außenliegender strömungsleitender Einrichtung ermöglicht durch Regulierung des Kammerdruckes eine frequenzabhängige und/oder amplitudenabhängige Veränderung der Steifigkeit.

Es ist denkbar, die erfindungsgemäße Ausgestaltung einer außenliegenden strömungsleitenden Einrichtung zur aktiven Beeinflussung der Steifigkeit auch nicht ausschließlich bei Hydrobuchsen vorzusehen. Die vorteilhafte Wirkung zeigt sich vielmehr auch bei anderen Hydrolagern.

### Kurzbeschreibung der Figuren

Einige Ausgestaltungen der erfindungsgemäßen Hydrobuchsenanordnung werden nachfolgend anhand der Figuren näher erläutert. Diese zeigen, jeweils schematisch:
- Fig. 1: eine Hydrobuchsenanordnung im Schnitt;
- Fig. 2: eine Hydrobuchsenanordnung mit einer ersten Einrichtung;
- Fig. 3: eine Hydrobuchsenanordnung mit einer Sensoreinrichtung;
- Fig. 4: eine Hydrobuchsenanordnung mit einer zweiten Einrichtung.

### Figurenbeschreibung

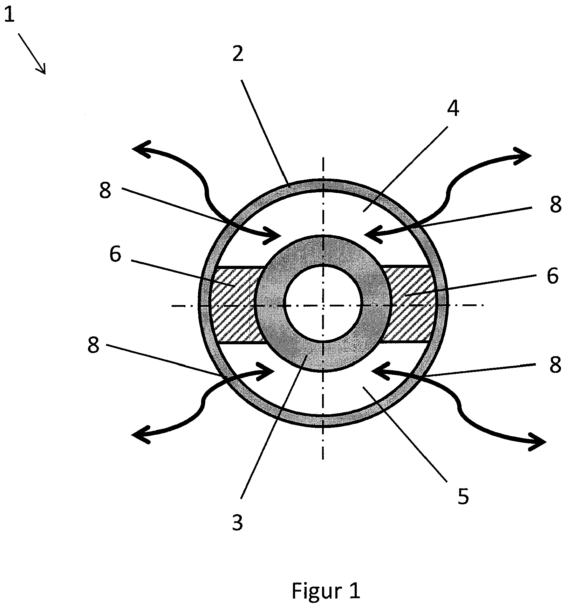

Figur 1 zeigt eine Hydrobuchsenanordnung 1, welche ein Bestandteil eines Achslenkerlagers ist. Das Achslenkerlager findet Einsatz in einem Drehgestell eines Schienenfahrzeugs.

Die Hydrobuchsenanordnung 1, umfasst ein hülsenförmiges Gehäuse 2, aus metallischem Werkstoff, welches eine Innenhülse 3, ebenfalls aus metallischem Werkstoff mit radialem Abstand umgibt. Das Gehäuse 2 und die Innenhülse 3 sind über einen Federkörper 6 miteinander wirkverbunden. Der Federkörper 6 ist aus Kunststoff, beispielsweise einem kautschukbasierten Werkstoff ausgebildet. Der Federkörper 6 ist so ausgebildet ist, dass sich zwischen Gehäuse 2 und Innenhülse 3 zwei Kammern 4, 5 ausbilden, welche mit einer Hydraulikflüssigkeit befüllbar sind. Dazu bildet der Federkörper 6 zwei Stege, welche jeweils an dem Gehäuse 2 und der Innenhülse 3 angebunden sind.

Die Kammern 4, 5 mit einer Einrichtung 7 hydraulisch verbunden. Dabei ist die Einrichtung 7 bidirektional durchströmbar. Durch die Einrichtung 7 kann beispielsweise die Hydraulikflüssigkeit von der einen Kammer 4 in die andere Kammer 5 gefördert werden. Des Weiteren können die Kammern 4, 5 entleert oder die Hydraulikflüssigkeit mit Druck in die Kammer 4, 5 gepresst werden. Dadurch kann der Kammerdruck und damit die Steifigkeit der Hydrobuchse modifiziert, ferner kann die Position der Innenhülse 3 zum Gehäuse 2 modifiziert werden.

Die Einrichtung 7 ist außerhalb des Gehäuses 2 angeordnet. Zum Anschluss der Einrichtung 7 weist das Gehäuse Öffnungen 8 auf, wobei jeder Kammer 4, 5 zumindest eine Öffnung 8 zugeordnet ist.

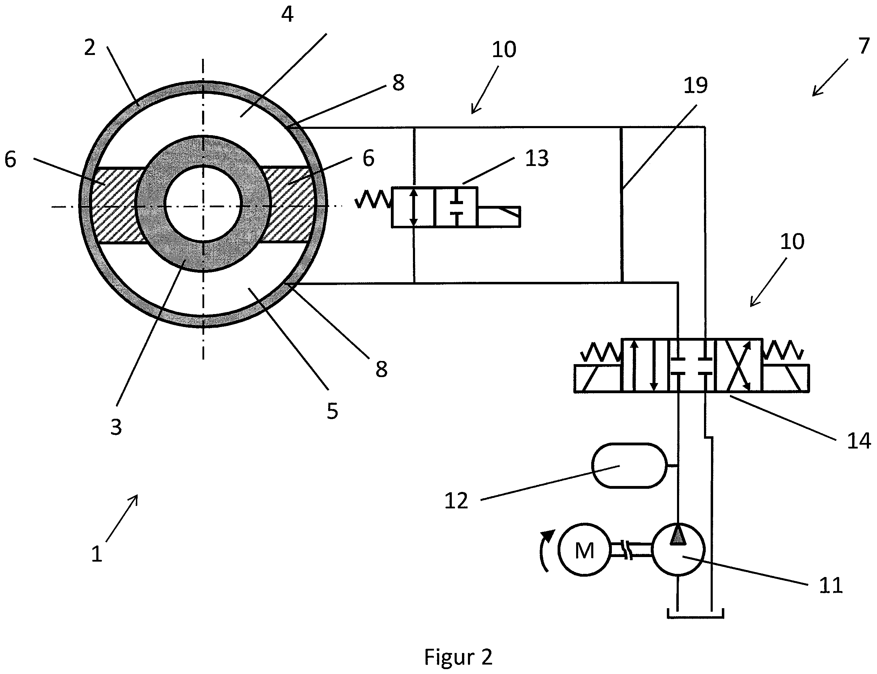

Figur 2 zeigt die Hydrobuchsenanordnung 1 gemäß Figur 1 mit einer ersten konkreten Ausgestaltung einer Einrichtung 7. Die Einrichtung 7 umfasst zunächst zwei Leitungen, von denen die eine in die erste Kammer 4 und die andere in die zweite Kammer 5 mündet. Beide Leitungen und damit beide Kammern 4, 5 sind über eine Ventilanordnung 10 strömungsleitend miteinander verbunden. Dazu umfasst die Ventilanordnung 10 ein erstes Wegeventil 13, welches als 2/2-Wegeventil ausgebildet ist. Das bedeutet, dass das Wegeventil 13 zwei Durchflusswege aufweist und zwei Schaltstellungen zulässt. In der ersten Schaltstellung sind beide Kammern 4, 5 strömungsleitend miteinander verbunden, in der zweiten Schaltstellung ist der Durchfluss versperrt.

Parallel zu dem ersten Wegeventil 13 ist ein Kanal 19 mit sehr kleinem Querschnitt vorgesehen, welcher die Kammern 4, 5 ebenfalls strömungsleitend miteinander verbindet und welcher als fail-safe-Einrichtung dient.

Ebenfalls parallel zu dem ersten Wegeventil 13 ist ein zweites Wegeventil 14 vorgesehen. Das zweite Wegeventil 14 ist als 4/3-Wegeventil ausgebildet. Dem zweiten Wegeventil 14 sind eine Pumpeinrichtung 11 und ein Druckspeicher 12 zugeordnet. In einer ersten Schaltstellung wird mittels der Pumpeinrichtung 11 die erste Kammer 4 befüllt und die zweite Kammer 5 entleert, in einer zweiten Schaltstellung wird mittels der Pumpeinrichtung 11 die zweite Kammer 5 befüllt und die erste Kammer 4 entleert, in einer dritten Schaltstellung sind die Durchflüsse abgesperrt. Der Füllgrad und der Druck in den Kammern 4, 5 wird durch Wahl der Schaltzeit des zweiten Wegeventils 14 bestimmt.

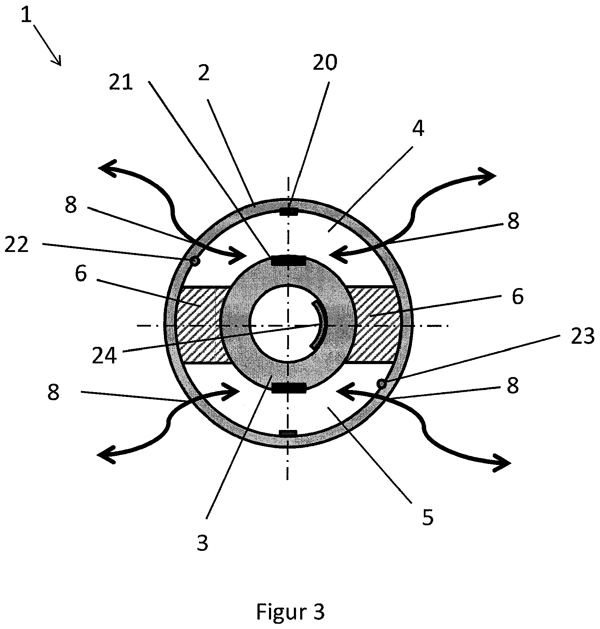

Figur 3 zeigt eine Hydrobuchsenanordnung 1 gemäß Figur 1 oder Figur 2, wobei in dieser Ausgestaltung eine Sensoreinrichtung 20, 21 vorgesehen ist, welche im Inneren der Hydrobuchse angeordnet ist. Dazu ist dem Gehäuse 2 und der Innenhülse 3 jeweils ein Sensorelement zugeordnet, welches eingerichtet ist, den Abstand zwischen Gehäuse 2 und Innenhülse 3 - das Spaltmaß - zu bestimmen. Bei der Ausgestaltung als Hallsonde umfasst die Sensoreinrichtung einen Dauermagneten 21, welcher auf der der Kammer 4 zugeordneten Oberfläche der Innenhülse 3 befestigt ist und in Richtung des Gehäuses 2 weist. Ferner umfasst die Sensoreinrichtung eine Hallsonde 20, welche auf der der Kammer 4 zugeordneten Oberfläche des Gehäuses 2 befestigt ist und in Richtung des Dauermagneten 21 weist. Ändert sich der Abstand zwischen Gehäuse 2 und Innenhülse 3, ändert sich das über den Dauermagneten 21 auf die Hallsonde 20 einwirkende Magnetfeld und aus der daraus resultierenden Spannungsänderung in der Hallsonde 20 kann der Abstand bestimmt werden.

Zur Verbesserung der Messgenauigkeit ist eine zweite Sensoreinrichtung vorgesehen. Dauermagnet und Hallsonde sind im Vergleich zu den Komponenten der Sensoreinrichtung um 180° versetzt an Gehäuse 2 und Innenhülse 3 angeordnet.

Des Weiteren umfasst die Sensoreinrichtung einen Temperatursensor 22 und einen Drucksensor 23, welche den Kammern 4, 5 zugeordnet und an der Innenwand des Gehäuses 2 befestigt sind.

Zur Erfassung der Belastung der Innenhülse 3 ist als weiterer Sensor ein Dehnungsmessstreifen 24 auf der Innenhülse 3 angebracht. Der Dehnungsmessstreifen 24 erfasst die Dehnung der Innenhülse 3. Aus der Dehnung können die von oder nach außen wirkenden Kräfte ermittelt werden. Ein derartiger Sensor ist insbesondere dann vorteilhaft, wenn die an dem Lager angreifenden Kräfte aktiv beeinflusst werden sollen.

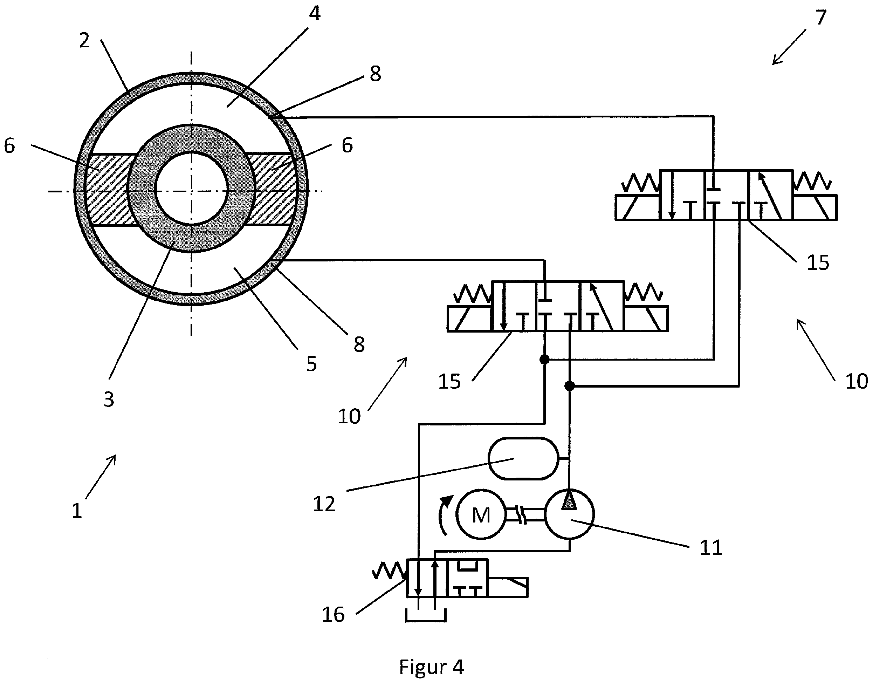

Figur 4 zeigt die Hydrobuchsenanordnung 1 gemäß Figur 1 mit einer zweiten konkreten Ausgestaltung einer Einrichtung 7. Die Einrichtung 7 umfasst zwei Leitungen, von denen die eine in die erste Kammer 4 und die andere in die zweite Kammer 5 mündet. Beide Leitungen und damit beide Kammern 4, 5 sind über eine Ventilanordnung 10 strömungsleitend miteinander verbunden. Dazu umfasst die Ventilanordnung 10 ein zweites Wegeventil 15, welches als 3/3-Wegeventil ausgebildet ist und ein drittes Wegeventil 15, welches ebenfalls als 3/3-Wegeventil ausgebildet ist. Die 3/3-Wegeventile 15 sind jeweils einer Kammer 4, 5 zugeordnet.

Des Weiteren sind beiden 3/3-Wegeventilen 15 eine Pumpeinrichtung 11 und ein Druckspeicher 12 zugeordnet. Dabei sind die 3/3-Wegeventile 15, die Pumpeinrichtung 11 und der Druckspeicher 12 so miteinander verbunden, dass die Hydraulikflüssigkeit in einem Kreislauf geführt werden kann. Dabei ist ein viertes Wegeventil 16 vorgesehen, welches als 4/2-Wegeventil ausgebildet ist. Das vierte Wegeventil 16 ist auf der Saugseite der Pumpeinrichtung 11 angeordnet. Dem vierten Wegeventil 16 ist ein Behälter zugeordnet. Das vierte Wegeventil 16 kann somit derart geschaltet werden, dass Hydraulikflüssigkeit entweder in den Behälter geleitet beziehungsweise aus diesem herausgepumpt wird oder dass die Hydraulikflüssigkeit in einem Kreislauf zirkuliert.

Durch das Zusammenwirken der beiden 3/3-Wegeventile 15 zusammen mit dem 4/4-Wegeventil 16 ergibt sich eine Vielzahl von Schaltstellungen. Die Wegeventile 15, 16 können derart verschaltet werden, dass die Kammern 4, 5 wahlweise befüllt oder entleert werden können und/oder dass die Hydraulikflüssigkeit zwischen den Kammern 4, 5 umströmt oder zirkuliert.

Die Sensoranordnung 20, 21, 22, 23, 24 ermöglicht nach Implementierung einer Regeleinheit mit einem Steuerungsalgorithmus in Echtzeit eine Modifikation der Steifigkeit der Hydrobuchse und eine Veränderung der Innenhülse 3 relativ zu dem Gehäuse 2. Das ermöglicht eine Einstellung der Achse - in der die Hydrobuchse montiert ist - hinsichtlich der daran angreifenden Kräfte.

Die Ventilanordnung 10 ermöglicht die Einstellung des Vordrucks der Hydraulikflüssigkeit im Hinblick auf den gewünschten Druck in den Kammern 4, 5, wobei eine Anpassung im laufenden Betrieb durch Nachregeln der Ventile jederzeit möglich ist. Dadurch kann die Federcharakteristik der Hydrobuchse von weich bis hart jederzeit stufenlos eingestellt werden.

Des Weiteren kann, je nach Einstellung der Ventilanordnung 10 neben der zuvor beschriebenen Federcharakteristik auch eine Drossel oder ein Tilger realisiert werden.

Die erfindungsgemäße Hydrobuchsenanordnung 1 gemäß der zuvor gezeigten Ausgestaltungen ermöglicht eine Vielzahl von Betriebszuständen. Bei einem rein passiven Betrieb ergibt sich ein Lager mit einer frequenzabhängigen Steifigkeit, der Verbindungskanal der Kammern 4, 5 liegt außerhalb des Lagers und kann mit Hilfe der Ventilanordnung 10 geöffnet, geschlossen und variiert werden. Dieser Betriebszustand kann auch als Notbetriebszustand (fail-safe) herangezogen werden.

Insbesondere bei der Ausgestaltung gemäß Figur 4 kann die außenliegende Einrichtung 7 mittels der Ventilanordnung 10 einfach in Länge und Dämpfungsverhalten - beispielsweise durch Zuschalten von Drosseln - variiert werden. Damit wird die Frequenz geändert, bei der der Steifigkeitswechsel stattfindet. Es ist denkbar, die Steifigkeit im Betrieb bis zu zweifach zu erhöhen. Dies erfolgt durch Erhöhen des Drucks in beiden Kammern 4, 5. Ferner ist es möglich, die Steifigkeit bis nahe an den statischen Wert für eine einstellbare Amplitude einzustellen. Dies erfolgt durch gleichzeitiges Absenken des Druckes in beiden Kammern 4, 5. Dadurch kann beispielsweise die Entkopplung von akustischen, hochfrequenten Störungen durch die Hydrobuchse wesentlich verbessert werden. Durch Vorhalten einer gezielten Druckdifferenz kann die Hydrobuchse auch als Aktor fungieren. Der Aktor kann wiederum verschiedene Steifigkeiten haben, welche davon abhängt, um welchen Mitteldruck die Druckdifferenz aufgebaut wird. Damit kann beispielsweise die Achse auf einen bestimmten Bogen eingestellt werden und die dynamische Steifigkeit gleichzeitig noch an die betrieblichen Gegebenheiten angepasst werden. Beispielsweise kann bei sehr schneller Fahrt durch einen weiten Bogen eine höhere dynamische Steifigkeit und bei langsamer Fahrt durch einen engeren Bogen eine geringere dynamische Steifigkeit eingestellt werden. Die geringe dynamische Steifigkeit ist dabei so gewählt, dass eine gute Fahrstabilität vorhanden ist, die geringere dynamische Steifigkeit sorgt aber für ein besseres akustisches Verhalten des Lagers und senkt bei schlechter Gleislage die Rad-Schienenkräfte.

## Patentansprüche

1. Hydrobuchsenanordnung (1), umfassend ein hülsenförmiges Gehäuse (2), welches eine Innenhülse (3) mit radialem Abstand umgibt, wobei Gehäuse (2) und Innenhülse (3) über einen Federkörper (6) miteinander wirkverbunden sind, wobei der Federkörper (6) so ausgebildet ist, dass sich zwischen Gehäuse (2) und Innenhülse (3) zwei Kammern (4, 5) ausbilden, welche mit einer Hydraulikflüssigkeit befüllbar sind und wobei die Kammern (4, 5) mit zumindest einer Einrichtung (7) hydraulisch verbunden sind, wobei die Einrichtung (7) außerhalb des Gehäuses (2) angeordnet ist, wobei das Gehäuse (2) zum Anschluss der Einrichtung (7) Öffnungen (8) aufweist, wobei jeder Kammer (4, 5) zumindest eine Öffnung (8) zugeordnet ist, wobei die Einrichtung (7) aktive Steuerungsmittel umfasst, wobei die Einrichtung (7) mit einer Ventilanordnung (10) versehen ist, dadurch gegenzeichnet, dass die aktiven Steuerungsmittel den Volumenstrom der zwischen den Kammern (4, 5) umströmenden Hydraulikflüssigkeit beeinflussen, wobei die aktven Steuerungsmittel durch Öffnen einen großen Volumenstrom einstellen und durch nahezu Verschließen einen geringen Volumenstrom einstellen.

2. Hydrobuchsenanordnung nach Anspruch 1, **dadurch gekennzeichnet, dass** dem Gehäuse (2) und der Innenhülse (3) eine Sensoreinrichtung (20, 21) zugeordnet ist.

3. Hydrobuchsenanordnung nach Anspruch 1 oder 2, **dadurch gekennzeichnet, dass** die Einrichtung (7) eine Drossel bildet.

4. Hydrobuchsenanordnung nach einem der Ansprüche 1 bis 3, **dadurch gekennzeichnet, dass** die Einrichtung (7) einen Tilger bildet.

5. Hydrobuchsenanordnung nach einem der Ansprüche 1 bis 4, **dadurch gekennzeichnet, dass** die Einrichtung (7) einen Speicher (12) umfasst.

6. Verwendung der Hydrobuchsenanordnung nach einem der vorherigen Ansprüche als aktives hydraulisches Achslenkerlager.

7. Verwendung nach Anspruch 6, **dadurch gekennzeichnet, dass** das Achslenkerlager Teil eines Drehgestells eines Schienenfahrzeugs ist.

## Claims

1. Hydro-bush arrangement (1) comprising a sleeve-shaped housing (2) which surrounds an inner sleeve (3) at a radial distance, wherein the housing (2) and the inner sleeve (3) are operatively interconnected by means of a spring body (6), the spring body (6) being designed such that two chambers (4, 5) are formed between the housing (2) and the inner sleeve (3) and can be filled with a hydraulic fluid, wherein the chambers (4, 5) are hydraulically connected to at least one device (7), wherein the device (7) is arranged outside the housing (2), wherein the housing (2) has openings (8) for connecting the device (7), wherein each chamber (4, 5) is assigned at least one opening (8), wherein the device (7) comprises active control means, wherein the device (7) is provided with a valve arrangement (10), **characterised in that** the active control means influence the volume flow of the hydraulic fluid circulating between the chambers (4, 5), wherein the active control means adjust a large volume flow by opening and adjust a small volume flow by almost closing.

2. Hydro-bush arrangement according to claim 1, **characterised in that** the housing (2) and the inner sleeve (3) are assigned a sensor device (20, 21).

3. Hydro-bush arrangement according to claim 1 or 2, **characterised in that** the device (7) forms a throttle.

4. Hydro-bush arrangement according to any one of claims 1 to 3, **characterised in that** the device (7) forms an absorber.

5. Hydro-bush arrangement according to any one of claims 1 to 4, **characterised in that** the device (7) comprises an accumulator (12).

6. Application of the hydro-bush arrangement according to any one of the preceding claims as an active hydraulic axle guide bearing.

7. Application according to claim 6, **characterised in that** the axle guide bearing forms part of a bogie of a rail vehicle.

## Revendications

1. Ensemble palier hydrodynamique (1), comprenant un boîtier (2) en forme de douille, qui entoure une douille intérieure (3) à une distance radiale, le boîtier (2) et la douille intérieure (3) étant reliés l'un à l'autre de manière fonctionnelle par le biais d'un corps élastique (6), le corps élastique (6) étant conçu de telle manière que deux compartiments (4, 5) se forment entre le boîtier (2) et la douille intérieure (3), lesdits compartiments (4, 5) pouvant être remplis d'un liquide hydraulique et étant en liaison hydraulique avec au moins un dispositif (7), le dispositif (7) étant disposé en dehors du boîtier (2), le boîtier (2) comportant des orifices (8) pour le raccordement du dispositif (7), au moins un orifice (8) étant associé à chaque compartiment (4, 5), le dispositif (7) comprenant des moyens de commande actifs, le dispositif (7) étant pourvu d'un ensemble de soupapes (10), **caractérisé en ce que** les moyens de commande actifs influencent le débit volumique du liquide hydraulique circulant entre les compartiments (4, 5), les moyens de commande actifs réglant un grand débit volumique en s'ouvrant et réglant un faible débit volumique en se fermant presque entièrement.

2. Ensemble palier hydrodynamique selon la revendication 1, **caractérisé en ce qu'**un dispositif de capteurs (20, 21) est associé au boîtier (2) et à la douille intérieure (3).

3. Ensemble palier hydraulique selon la revendication 1 ou 2, **caractérisé en ce que** le dispositif (7) forme un étrangleur.

4. Ensemble palier hydraulique l'une des revendications 1 à 3, **caractérisé en ce que** le dispositif (7) forme un amortisseur.

5. Ensemble palier hydraulique l'une des revendications 1 à 4, **caractérisé en ce que** le dispositif (7) comprend un accumulateur (12).

6. Utilisation de l'ensemble palier hydraulique selon l'une des revendications précédentes comme palier hydraulique actif de guide d'essieu.

7. Utilisation selon la revendication 6, **caractérisée en ce que** le palier de guide d'essieu fait partie d'un bogie d'un véhicule ferroviaire.
